# EUROPÄISCHE PATENTSCHRIFT

(11) **EP 3 119 555 B1**
(45) Veröffentlichungstag und Bekanntmachung des Hinweises auf die Patenterteilung: **31.01.2018**
(21) Anmeldenummer: 15712528.7
(22) Anmeldetag: 18.03.2015
(51) Int. Cl.: B23Q 1/00, B23B 31/40, B23Q 3/06, B25B 27/02

(54) **SPANNVORRICHTUNG MIT SPANNBUCHSE**
CLAMPING DEVICE WITH CLAMPING BUSHING
DISPOSITIF DE SERRAGE AVEC DOUILLE DE SERRAGE

(30) Priorität: 21.03.2014 DE 102014004104
(43) Veröffentlichungstag der Anmeldung: 25.01.2017
(60) Teilanmeldung: 17207353.8
(73) Patentinhaber: Ludwig Ehrhardt GmbH, 35321 Laubach (DE)
(72) Erfinder: GRAULICH, Oliver, 35321 Laubach (DE)
(74) Vertreter: v. Bezold & Partner Patentanwälte - PartG mbB
(86) Internationale Anmeldenummer: PCT/EP2015/000597
(87) Internationale Veröffentlichungsnummer: WO 2015/139838

(56) Entgegenhaltungen:
- DE-A1- 4 020 981
- US-A- 2 360 054
- US-A- 2 497 633
- US-A- 2 594 429
- US-A- 5 647 627
- US-A1- 2006 049 568
- US-A1- 2010 327 503

## Beschreibung

Die Erfindung betrifft eine Spannvorrichtung gemäß dem Oberbegriff des Patentanspruchs 1 zum mechanischen Spannen eines Bauteils (z.B. eines zu bearbeitenden Werkstücks).

Eine derartige Spannvorrichtung geht beispielsweise aus der DE 40 20 981 A1 hervor. Aus dem Stand der Technik sind Spannvorrichtungen bekannt, die einen pneumatisch oder hydraulisch verschiebbaren Zuganker (Spannbolzen) aufweisen, der mit seinem freien Ende in eine entsprechende Sackbohrung in dem zu spannenden Bauteil eingeführt werden kann. Das freie Ende des Zugankers erweitert sich hierbei konisch zu seinem Ende hin und ist von einer Spannbuchse umgeben, die zusammen mit dem freien Ende des Zugankers in die Sackbohrung des zu spannenden Bauteils eingeführt wird. Beim Zurückziehen des Zugankers verbleibt die Spannbuchse dann zunächst in ihrer Position, so dass das Zurückziehen des Zugankers aufgrund der konischen Aufweitung des freien Endes des Zugankers zu einer radialen Aufweitung der Spannbuchse und damit zu einem Festspannen des Bauteils führt. Bei einem weiteren Zurückziehen des Zugankers kann das nun gespannte Bauteil dann zusammen mit dem Zuganker und der Spannbuchse noch eine Niederzugsbewegung ausführen. Bei den bekannten Spannvorrichtungen der vorstehend beschriebenen Art erfolgt das Spannen des Bauteils durch eine reibschlüssige Verbindung zwischen der äußeren Mantelfläche der Spannbuchse und der inneren Mantelfläche der Sackbohrung in dem Bauteil. Bei dieser bekannten Spannvorrichtung ist die Spannwirkung jedoch unbefriedigend.
Aus DE 40 20 981 A1 ist eine Spannbuchse zum Einspannen in einer Bohrung eines zu spannenden Werkstücks bekannt, wobei die Spannbuchse aufspreizbar ist. An ihrer Außenseite weist die Spannbuchse hierbei eine Verzahnung auf, die im aufgespreizten Zustand in die Innenwand der Bohrung des Werkstücks eindringt und dadurch eine formschlüssige Verbindung bildet. Nachteilig daran ist zunächst die Tatsache, dass zum Herstellen der formschlüssigen Verbindung eine hohe radiale Kraft auf die Spannbuchse ausgeübt werden muss. Ein weiterer Nachteil besteht darin, dass das Werkstück aus einem weicheren Material bestehen muss als die Spannbuchse. Schließlich führen die einzelnen Spannvorgänge hierbei zu einer Deformation des Werkstücks an der Innenwand der Bohrung, da die Verzahnung in die Innenwand eindringen muss.
Ferner ist zum Stand der Technik hinzuweisen auf DE 20 2013 007 456 U1, DE 10 2007 039 032 A1, US 2006/0049568 A1, DE 10 2004 025 256 A1 und US 2010/0327503 A1.
Zum allgemeinen technischen Hintergrund von Spannbuchsen auf anderen technischen Gebieten ist ferner hinzuweisen auf US 2 497 633, US 2 594 429, US 5 647 627 und US 2 360 054. Diese Veröffentlichungen betreffen jedoch keine gattungsgemäßen Spannvorrichtungen und sind deshalb fernliegend.
Der Erfindung liegt deshalb die Aufgabe zugrunde, die Spannwirkung zu verbessern.
Diese Aufgabe wird durch eine erfindungsgemäße Spannvorrichtung gemäß dem Hauptanspruch gelöst. Zum Spannen zwischen der äußeren Mantelfläche der Spannbuchse und der Innenwand der Sackbohrung in dem zu spannenden Bauteil ist eine formschlüssige Verbindung vorgesehen. Vorteilhaft an einer solchen formschlüssigen Verbindung zum Spannen eines Bauteils sind die größeren maximalen Spannkräfte und die größere Zuverlässigkeit der formschlüssigen Verbindung.

Gemäß der Erfindung besteht die formschlüssige Verbindung zwischen Spannbuchse und Bauteil aus einer Gewindeverbindung.

Hierbei weist die äußere Mantelfläche der Spannbuchse ein Außengewinde auf, das in ein entsprechend angepasstes Innengewinde in der Innenwand der Sackbohrung des Bauteils eingreift und dadurch die formschlüssige Verbindung zwischen Spannbuchse und Bauteil herstellt.

Bei der Gewindeverbindung zwischen der Spannbuchse und dem Bauteil weisen das Außengewinde der Spannbuchse und das Innengewinde des Bauteils vorzugsweise dieselbe Gewindesteigung auf, um einen formschlüssigen Gewindeeingriff zu ermöglichen.

Hierbei ist zu erwähnen, dass die Spannbuchse wie bei der eingangs beschriebenen herkömmlichen Spannbuchse in radialer Richtung aufgeweitet werden kann, wobei die Spannbuchse im radial zusammengezogenen Zustand (entspannter Zustand) keinen Formschluss mit dem Bauteil herstellt, wohingegen die Spannbuchse im radial erweiterten Zustand formschlüssig in das Bauteil eingreift.

Das Außengewinde der Spannbuchse weist deshalb im radial zusammengezogenen Zustand in der Regel einen kleineren Gewindedurchmesser auf als das Innengewinde der Bohrung, damit die Spannbuchse dann ohne Probleme in die Sackbohrung in dem Bauteil eingeführt werden kann.

Im radial aufgeweiteten Zustand der Spannbuchse weist das Außengewinde der Spannbuchse dagegen vorzugsweise den gleichen Gewindedurchmesser auf wie das Innengewinde der Bohrung, damit Außengewinde und Innengewinde dann ineinander eingreifen und die formschlüssige Verbindung bilden.

Weiterhin ist zu erwähnen, dass der Außendurchmesser des Außengewindes (d.h. von Spitze zu Spitze) der Spannbuchse im radial zusammengezogenen Zustand der Spannbuchse vorzugsweise kleiner ist als der Kerndurchmesser des Innengewindes der Bohrung. Dies ist sinnvoll, damit die Spannbuchse im radial zusammengezogenen Zustand in die Sackbohrung des Bauteils eingeführt werden kann.
Bei dem radial zusammengezogenen Zustand handelt es sich in der Regel um einen entspannten Zustand der Spannvorrichtung, d.h. ohne eine radiale Aufweitung durch den Zuganker. Der radial aufgeweitete Zustand der Spannbuchse ist dagegen in der Regel nicht der Normalzustand der Spannbuchse. Vielmehr nimmt die Spannbuchse den radial aufgeweiteten Zustand nur dann an, wenn die Spannbuchse von dem Zuganker radial aufgeweitet wird.
In einem bevorzugten Ausführungsbeispiel der Erfindung wird die radiale Aufweitung der Spannbuchse durch eine besondere Konstruktion ermöglicht. Hierbei weist die Spannbuchse mehrere Segmente auf, die über den Umfang der Spannbuchse verteilt angeordnet sind. Die benachbarten Segmente der Spannbuchse sind hierbei jeweils durch einen axial verlaufenden Schlitz voneinander getrennt, wobei sich die einzelnen Schlitze jeweils vom freien Ende der Spannbuchse ausgehend zumindest über einen Teil der axialen Länge der Spannbuchse erstrecken. Diese geschlitzte Anordnung ermöglicht es den einzelnen Segmenten der Spannbuchse, in radialer Richtung auszufedern, um eine radiale Aufweitung der Spannbuchse zu ermöglichen.

Weiterhin ist zu erwähnen, dass die Spannbuchse vorzugsweise wie die herkömmliche Spannbuchse eine axiale Durchgangsbohrung für den Zuganker aufweist, wobei sich die Durchgangsbohrung vorzugsweise zum freien Ende der Spannbuchse hin radial erweitert, insbesondere in konischer Form. Beim Zurückziehen des Zugankers gleiten dann die konische Mantelfläche des Zugankers einerseits und die konische Innenwand der Durchgangsbohrung andererseits aufeinander, was zu einer entsprechenden radialen Aufweitung der Spannbuchse führt.
Die erfindungsgemäße Spannvorrichtung weist zunächst einen axial verschiebbaren Zuganker (Spannbolzen) zum Spannen des Bauteils auf, wobei die Funktionsweise eines solchen Zugankers bereits vorstehend beschrieben wurde.
Weiterhin umfasst die erfindungsgemäße Spannvorrichtung einen axial verschiebbaren Kolben zum Verschieben des Zugankers, wobei der Kolben beispielsweise hydraulisch, pneumatisch, elektromotorisch oder manuell-mechanisch angetrieben werden kann. Die Spannvorrichtung weist eine Spannbuchse auf, wie sie vorstehend beschrieben wurde, wobei der Zuganker axial durch die Spannbuchse verläuft und an seinem freien Ende eine radiale Aufweitung aufweist, so dass der Zuganker beim Zurückziehen des Zugankers die Spannbuchse radial aufweitet. Hierbei stellt die Spannbuchse also - wie vorstehend beschrieben wurde - eine formschlüssige Verbindung zwischen der Spannbuchse und der Sackbohrung in dem zu spannenden Bauteil her.
In dem bevorzugten Ausführungsbeispiel der Erfindung ist der Zuganker in dem Kolben durch einen Bajonettverschluss lösbar verankert. Dies bedeutet, dass der Zuganker in einer bestimmten Drehstellung bezüglich seiner Längsachse in die Spannvorrichtung eingeführt oder daraus entnommen werden kann. Die Verankerung des Zugankers erfolgt dann im eingeführten Zustand, indem der Zuganker um seine Längsachse gedreht wird, beispielsweise um 90°. Vorteilhaft an einem solchen Bajonettverschluss für den Zuganker ist die Tatsache, dass zum Austausch des Zugankers keine Demontage der Spannvorrichtung erforderlich ist. Darüber hinaus kann der Zuganker auf diese Weise direkt an der Spannvorrichtung ausgewechselt werden. Hierbei ist zu erwähnen, dass der Austausch des Zugankers vorzugsweise ohne eine Beeinträchtigung von Fluidleitungen (z.B. Hydraulikleitungen) zum Antrieb des Kolbens erfolgen kann, so dass beim Austausch des Zugankers nicht die Gefahr besteht, dass Hydraulikflüssigkeit austritt.

In der bevorzugten Ausführungsform eines solchen Bajonettverschlusses weist der Zuganker an seinem unteren Ende eine hammerförmige seitliche Erweiterung auf. Darüber hinaus weist der Kolben und auch die Spannvorrichtung an sich eine Axialbohrung auf, durch die der Zuganker eingeführt werden kann. Diese Axialbohrung ist im Querschnitt ein Langloch, damit der Zuganker trotz der hammerförmigen seitlichen Erweiterung eingeführt werden kann.

Weiterhin ist zu erwähnen, dass bei dem Bajonettverschluss vorzugsweise eine erste Feder vorgesehen ist, die den Zuganker vorspannt, um ein Herausfallen des Zugankers aus der Spannvorrichtung zu vermeiden.

In einem bevorzugten Ausführungsbeispiel der Erfindung weist der Bajonettverschluss zwischen dem Zuganker und dem Kolben eine Drehwinkelbegrenzung auf, die den Drehwinkel des Zugankers begrenzt. Vorzugsweise wirkt diese Drehwinkelbegrenzung in beiden Drehrichtungen und verfügt hierzu über jeweils einen Drehwinkelanschlag. Beispielsweise kann der Drehwinkelanschlag aus einem Stift bestehen, der in eine entsprechende Bohrung in dem Kolben eingesteckt ist.

Darüber hinaus weist der Bajonettverschluss vorzugsweise eine Verdrehsicherung auf, um eine unbeabsichtigte Lösung des Bajonettverschlusses zu verhindern. Beispielsweise kann diese Verdrehsicherung einen Drehwinkelanschlag aufweisen, der verhindert, dass sich der Zuganker selbstständig in eine Stellung drehen kann, die ein Lösen des Bajonettverschlusses und damit ein Herausziehen des Zugankers erlaubt. Auch hierbei kann der Drehwinkelanschlag beispielsweise einen Stift aufweisen, der in eine entsprechende Bohrung in dem Kolben eingesteckt ist.

Es wurde bereits vorstehend kurz erwähnt, dass der Kolben und damit auch der Zuganker vorzugsweise hydraulisch oder pneumatisch angetrieben wird. Die erfindungsgemäße Spannvorrichtung weist deshalb vorzugsweise zwei Druckräume auf, nämlich einen ersten Druckraum zur hydraulischen oder pneumatischen Druckbeaufschlagung des Kolbens zum Spannen des Zugankers und einen zweiten Druckraum zur hydraulischen oder pneumatischen Druckbeaufschlagung des Kolbens zum Entspannen des Zugankers.

Der erste Druckraum zum Spannen des Zugankers ist in der Regel über dem Kolben angeordnet und drückt den Kolben und damit auch den Zuganker deshalb vorzugsweise nach unten. Der zweite Druckraum zum Entspannen des Zugankers ist dagegen vorzugsweise unter dem Kolben angeordnet und drückt den Kolben deshalb zum Entspannen vorzugsweise nach oben.

In einem bevorzugten Ausführungsbeispiel der Erfindung weist die Spannvorrichtung eine sogenannte Eigensicherung auf, die bei einem Druckausfall dafür sorgt, dass das Bauteil gespannt bleibt. Hierzu kann eine zweite Feder vorgesehen sein, die den Kolben und damit auch den Zuganker in die Spannstellung vorspannt. In der Regel zieht die zweite Feder den Kolben und damit auch den Zuganker nach unten, wodurch die Spannbuchse radial aufgeweitet wird und dadurch eine reibschlüssige und/oder formschlüssige Verbindung mit dem zu spannenden Bauteil herstellt.

Vorzugsweise umfasst die erfindungsgemäße Spannvorrichtung auch eine Abfrageeinrichtung zum Abfragen des Zustands der Spannvorrichtung. Beispielsweise kann die Abfrageeinrichtung folgende Zustände der Spannvorrichtung erkennen:
- Bruch des Zugankers,
- Bruch der Spannbuchse,
- Auflage oder Abwesenheit eines Bauteils auf der Spannvorrichtung (Auflagekontrolle), sowie
- axiale Stellung des Zugankers bzw. des Kolbens.
- Vorrichtung entspannt (Zuganker und Kolben in entspannter Stellung).
- Bohrung im Werkstück zu groß (Kolben fährt dann in die untere Stellung).

In dem bevorzugten Ausführungsbeispiel der Erfindung arbeitet eine solche Abfrageeinrichtung pneumatisch. Hierzu kann die Abfrageeinrichtung Druckluft aus der Auflagefläche der Spannvorrichtung ausblasen. Bei einer Auflage eines Bauteils auf der Auflagefläche versperrt das Bauteil dann die Austrittsöffnung, was sich in einer entsprechenden Änderung von Druck und Strömung äußert und damit messtechnisch erfassbar ist.

Darüber hinaus kann die Druckluft von der Abfrageeinrichtung auch in den Zylinder eingeleitet werden, in dem der Kolben verschiebbar ist. Dies ermöglicht eine Erfassung der Kolbenstellung, da der Kolben die Bohrung beispielsweise im maximal gespannten Zustand oder bei einem Bruch des Zugankers freigeben kann, was sich wiederum in einer entsprechenden Änderung von Druck bzw. Strömung der Druckluft äußert und damit messtechnisch erfassbar ist.

Ferner umfasst die erfindungsgemäße Spannvorrichtung vorzugsweise eine Sperrlufteinrichtung zum Ausblasen von Sperrluft im Bereich einer Auflage um das freie Ende des Zugankers herum. Die Sperrluft soll dafür sorgen, dass der Auflagebereich der Spannvorrichtung sauber bleibt.

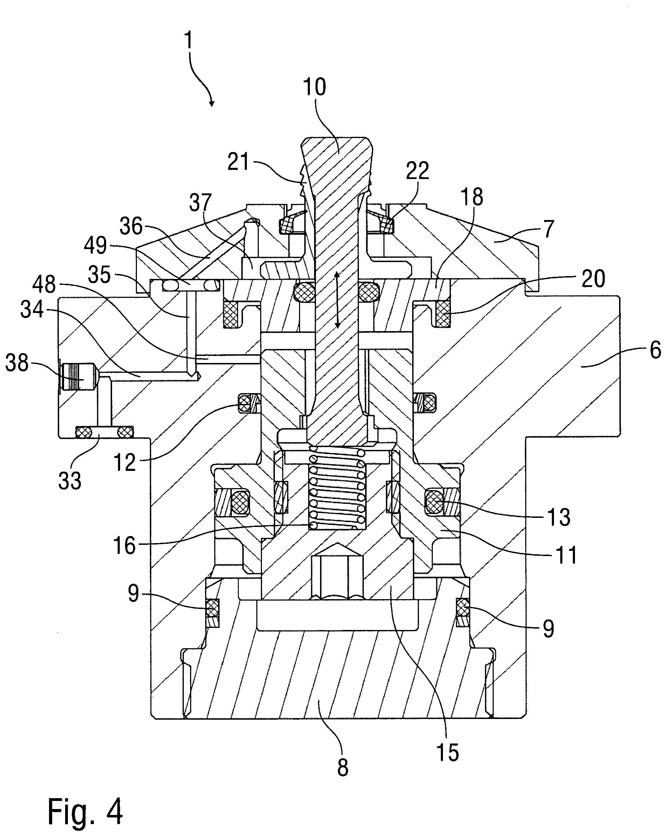

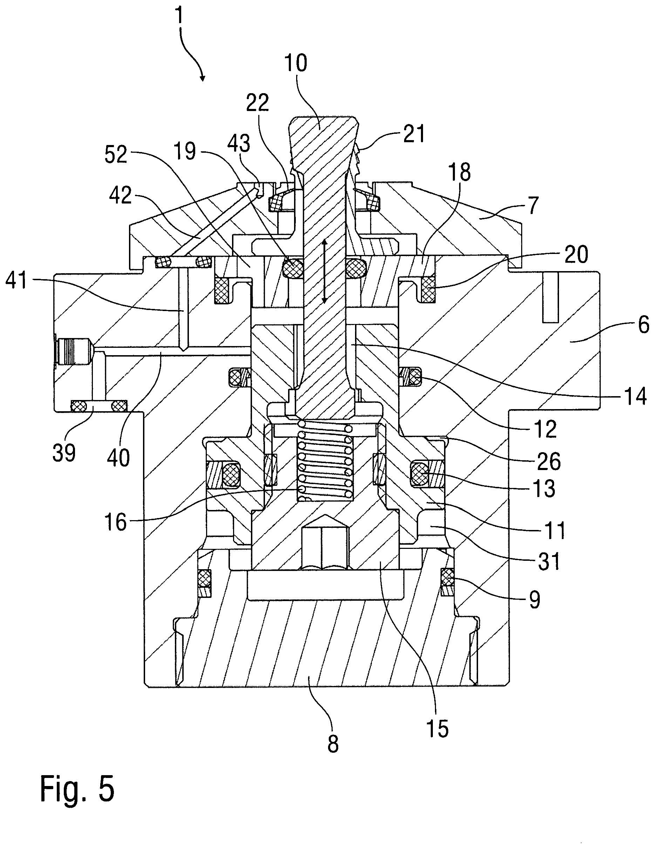

Darüber hinaus kann die Druckluft von der Sperrlufteinrichtung auch in den Zylinder eingeleitet werden, in dem der Kolben verschiebbar ist. In entspannter Stellung steigt der Druck in dieser Leitung durch die vorhandene Drossel. Dies ermöglicht eine Abfrage der Entspann-Stellung. Das Werkstück kann somit von der Vorrichtung entfernt werden. In gespannter Stellung tritt die Luft auch über die Bohrungen 48 und 52 (vgl. Figuren 4 und 5) mit größerem Volumen (Druckdifferenz ist messbar).

Darüber hinaus weist die erfindungsgemäße Spannvorrichtung vorzugsweise ein elastisches Zentrierungselement auf, um eine Vorzentrierung des Zugankers in der Spannvorrichtung zu bewirken. In dem bevorzugten Ausführungsbeispiel der Erfindung ist das Zentrierungselement ein elastischer O-Ring, der den Zuganker ringförmig umgibt, so dass ein radiales Ausweichen des Zugankers zu einer zentrierenden Gegenkraft durch den O-Ring führt. In einer Variante der Erfindung ist das Zentrierungselement (z.B. O-Ring) hierbei unter der Spannbuchse angeordnet und umgibt nur den Zuganker, wobei das Zentrierungselement unmittelbar an der Mantelfläche des Zugankers anliegt. In einer anderen Variante der Erfindung umgibt das Zentrierungselement (z.B. O-Ring) dagegen sowohl den Zuganker als auch die umgebende Spannbuchse, so dass das Zentrierungselement außen an der Spannbuchse anliegt.

Ferner ist zu erwähnen, dass die erfindungsgemäße Spannvorrichtung vorzugsweise zwei axiale Bewegungen ausführen kann, nämlich zum einen eine Spannbewegung und zum anderen eine Niederzugsbewegung. Die Spannbewegung dient ausschließlich dazu, die Spannbuchse radial aufzuweiten und dadurch eine reibschlüssige oder formschlüssige Verbindung zwischen der Spannbuchse und dem zu spannenden Bauteil herzustellen. Während der Spannbewegung wird das zu spannende Bauteil dagegen selbst noch nicht bewegt. Nach dem Spannen des Bauteils durch die Spannbewegung erfolgt dann jedoch noch eine axiale Niederzugsbewegung, wobei das nun gespannte Bauteil axial gegen die Spannvorrichtung gezogen wird, um eine definierte Lage des Bauteils einzustellen. Zur Ermöglichung einer solchen Niederzugsbewegung ist die Spannbuchse in der Spannvorrichtung vorzugsweise mit einem axialen Spiel gelagert, damit die Spannbuchse zusammen mit dem gespannten Bauteil die axiale Niederzugsbewegung ausführen kann.

Vorzugsweise ist hierbei eine dritte Feder vorgesehen zum Vorspannen der Spannbuchse entgegen der Niederzugsbewegung. Die dritte Feder drückt die Spannbuchse also nach oben, so dass der Zuganker bei der Niederzugsbewegung die Federkraft der dritten Feder überwinden muss. Die dritte Feder sorgt während der vorangehenden Spannbewegung des Zugankers dafür, dass die Spannbuchse nicht axial ausweicht, sondern radial aufgeweitet wird. Zum einen bietet die dritte Feder also einen ausreichenden Widerstand, damit die Spannbuchse beim Niederziehen des Zugankers nicht axial ausweicht, sondern sich radial aufweitet. Zum anderen ist die dritte Feder aber so nachgiebig, dass die aufgeweitete Spannbuchse zusammen mit dem gespannten Bauteil eine Niederzugsbewegung ausführen kann.

In einem Ausführungsbeispiel der Erfindung weist die Spannbuchse unten einen radial abstehenden Kragen auf, wobei die dritte Feder den radial abstehenden Kragen außen umgibt und radial nach innen drückt. Die hierbei auf den radial abstehenden Kragen wirkende und nach innen gerichtete Spannkraft wird dann in der Spannbuchse umgewandelt in eine entsprechende axial gerichtete Kraft, die die Spannbuchse nach oben drückt.

In einer anderen Ausführungsform ist die dritte Feder dagegen unter der Spannbuchse angeordnet und drückt die Spannbuchse axial nach oben.

In einer vorteilhaften Variante der Erfindung weist die Spannbuchse an ihrer Unterseite eine konische Auflauffläche auf, die sich nach oben hin konisch verjüngt. Die Spannbuchse liegt mit ihrer konischen Auflauffläche hierbei auf einer in der Spannvorrichtung fixierten und komplementär geneigten konischen Auflauffläche auf. Das Aufeinandergleiten der konischen Auflaufflächen führt dann bei einem Spannvorgang zu einer radialen Aufweitung der Spannbuchse und dann während der Niederzugsbewegung auch zu einer axialen Abwärtsbewegung.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine aufgeschnittene Perspektivansicht einer erfindungsgemäßen Spannvorrichtung,
- Figur 1B: eine Detailansicht des Bajonettverschlusses der Spannvorrichtung aus Figur 1A,
- Figur 2: eine Querschnittsansicht der Spannvorrichtung aus den Figuren 1A und 1B zur Verdeutlichung der Druckbeaufschlagung des Kolbens beim Spannen,
- Figur 3: eine andere Querschnittsansicht der Spannvorrichtung aus den Figuren 1A und 1B zur Verdeutlichung der Druckbeaufschlagung des Kolbens beim Entspannen,
- Figur 4: eine weitere Querschnittsansicht der Spannvorrichtung aus den Figuren 1A und 1B zur Verdeutlichung des Ausblasens von Sperrluft aus der Spannvorrichtung und zur Erläuterung einer Abfrage der Entspann-Stellung mit einer Drossel (Meldung: Werkstück kann entnommen werden),
- Figur 5: eine weitere Querschnittsansicht durch die Spannvorrichtung aus den Figuren 1A und 1B zur Verdeutlichung einer pneumatischen Abfrageeinrichtung,
- Figur 6: eine vergrößerte Detailansicht aus Figur 2 zur Verdeutlichung des axialen Spiels der Spannbuchse als Voraussetzung für eine Niederzugsbewegung,
- Figur 7: eine vergrößerte Detailansicht in axialer Richtung auf dem eingerasteten Spannbolzen des Bajonettverschlusses,
- Figur 8: eine Querschnittsansicht zur Verdeutlichung des Bajonettverschlusses für den Zuganker,
- Figur 9: eine Abwandlung des Ausführungsbeispiels gemäß den Figuren 1A bis 8 mit einer zusätzlichen Feder zur Eigensicherung,
- Figur 10: eine Abwandlung mit einer konischen Auflauffläche an der Spannbuchse zur radialen Aufweitung der Spannbuchse,
- Figur 11: eine Abwandlung mit einem elastischen Ring zur Erleichterung des Einfügens des Gewindes,
- Figur 12: eine Abwandlung mit einem Luftpolster zur Erleichterung des Einfügens des Gewindes, sowie
- Figur 13A: eine Querschnittsansicht durch ein weiteres Ausführungsbeispiel entlang der Schnittlinie F-F in Figur 13C, wobei der Bajonettverschluss eine Verdrehsicherung und eine Drehwinkelbegrenzung aufweist,
- Figur 13B: eine Schnittansicht entlang der Schnittlinie G-G in Figur 13C, sowie
- Figur 13C: eine Querschnittsansicht des Ausführungsbeispiels gemäß den Figuren 13A und 13B.

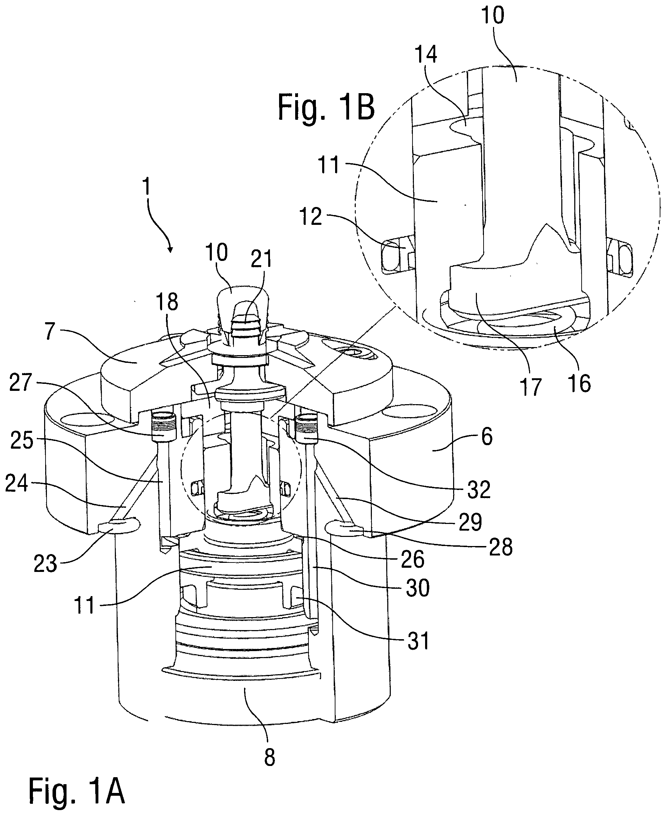

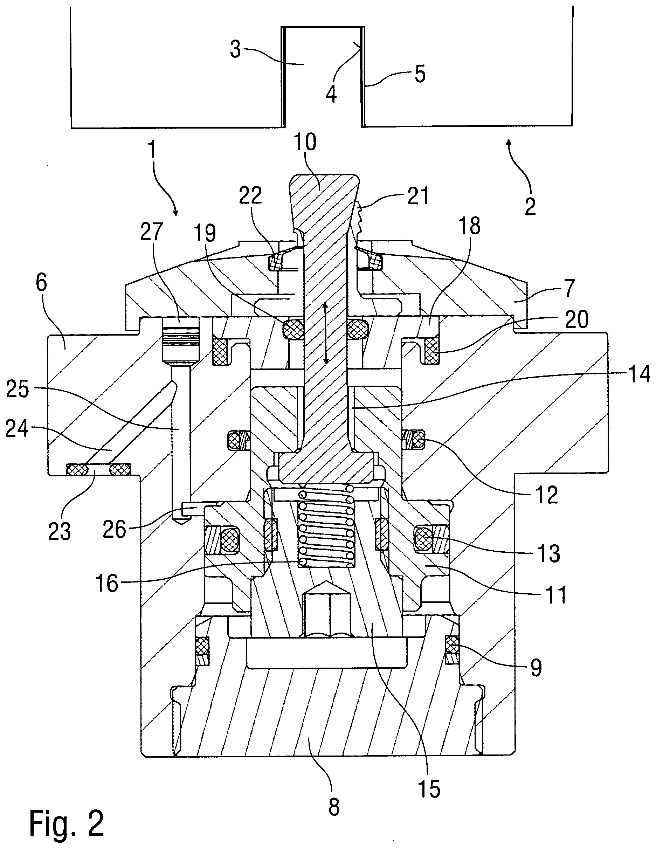

Die Figuren 1A bis 8 zeigen verschiedene Ansichten einer erfindungsgemäßen Spannvorrichtung 1 zum Spannen eines Bauteils 2, wobei das Bauteil 2 nur in Figur 2 schematisch dargestellt ist und ansonsten zur Wahrung der Übersichtlichkeit weggelassen ist. Das Bauteil 2 weist zum Eingriff durch die Spannvorrichtung 1 eine Sackbohrung 3 mit einer Innenwand 4 auf, die mit einem Innengewinde 5 versehen ist, um einen formschlüssigen Eingriff zu ermöglichen, wie noch detailliert beschrieben wird.

Die Spannvorrichtung 1 weist ein Gehäuse 6 auf, das oben durch einen Gehäusedeckel 7 und unten durch einen Gehäuseboden 8 verschlossen ist. Der Ringspalt zwischen dem Gehäuseboden 8 und dem Gehäuse 6 ist hierbei durch eine Dichtung 9 abgedichtet.

In der Spannvorrichtung 1 ist ein Zuganker 10 axial verschiebbar angeordnet, wobei der Zuganker 10 von einem ebenfalls axial verschiebbaren Kolben 11 verschoben werden kann, wie ebenfalls noch detailliert beschrieben wird. Der Ringspalt zwischen der äußeren Mantelfläche des Kolbens 11 und der Innenwand des Gehäuses 6 wird hierbei durch zwei Dichtungen 12, 13 abgedichtet.

Der Kolben 11 weist eine axiale Durchgangsbohrung 14 auf, durch die das untere Ende des Zugankers 10 hindurchgeführt ist, wobei der Zuganker 10 in dem Kolben 11 durch einen lösbaren Bajonettverschluss verankert ist, wie noch detailliert beschrieben wird.

In den Kolben 11 ist unten ein Kolbeneinsatz 15 eingesetzt, wobei sich am Boden des Kolbeneinsatzes 15 eine Feder 16 abstützt, die den Zuganker 10 axial nach oben drückt, damit sich der Bajonettverschluss des Zugankers 10 nicht versehentlich löst.

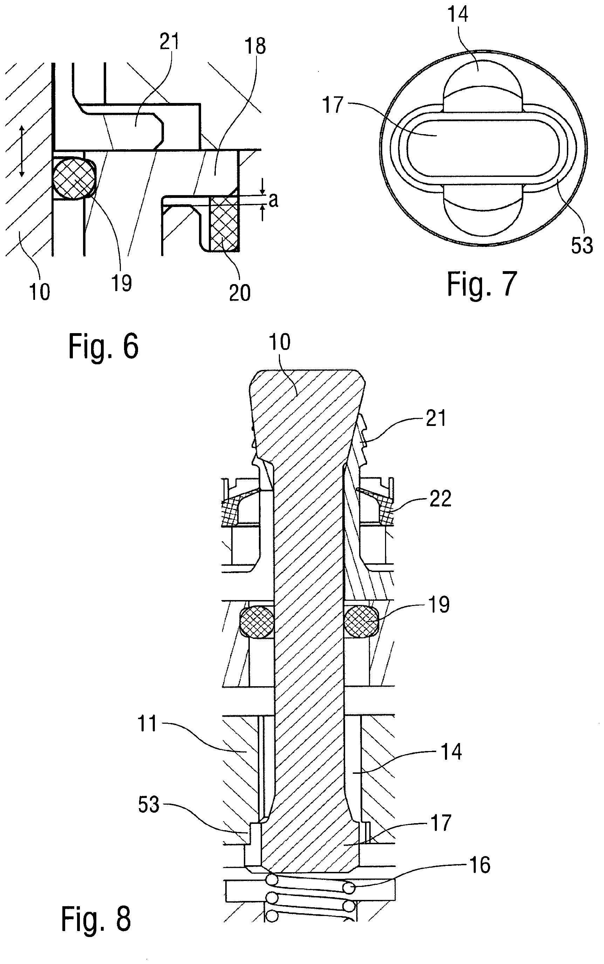

Die Durchgangsbohrung 14 in dem Kolben 11 ist hierbei im Querschnitt als Langloch ausgeführt, wie aus Figur 7 ersichtlich ist. Der Zuganker 10 weist an seinem unteren Ende eine hammerförmige seitliche Erweiterung 17 auf, die sich im verankerten Zustand des Bajonettverschlusses unten an Vorsprüngen 53 in dem Kolben 11 abstützt. In einer bestimmten Winkelstellung kann der Zuganker 10 also einfach in die Spannvorrichtung 1 eingeführt werden, da die als Langloch ausgebildete Durchgangsbohrung 14 dann ausreichend Platz bietet. Nach dem Einführen des Zugankers 10 wird der Zuganker 10 dann um 90° gedreht, woraufhin sich der Zuganker 10 mit seiner hammerförmigen Erweiterung 17 an dem Kolben 11 abstützt.

Es sind jedoch auch andere Varianten möglich, wie beispielsweise eine Befestigung z.B. über Schwenkkurve oder Rastbolzen.

Die Feder 16 verhindert hierbei, dass sich der Zuganker 10 unabsichtlich dreht und dann aus der Spannvorrichtung 1 herausfallen könnte (Einrasten an dem Vorsprung 53).

Darüber hinaus weist die Spannvorrichtung 1 im oberen Bereich ein Innenteil 18 auf, das den Zuganker 10 ringförmig umgibt und eine Durchgangsbohrung enthält, in der ein O-Ring 19 zur Vorzentrierung des Zugankers 10 angeordnet ist. Bei einem seitlichen Ausweichen des Zugankers 10 übt der O-Ring 19 nämlich eine nach innen gerichtete Gegenkraft aus, wodurch der Zuganker 10 in der Spannvorrichtung 1 zentriert wird.

Das Innenteil 18 stützt sich hierbei über eine Druckfeder 20 an dem Gehäuse 6 ab. Die Druckfeder 20 drückt das Innenteil 18 also nach oben.

Das freie Ende des Zugankers 10 ist von einer Spannbuchse 21 umgeben, wobei die Spannbuchse 21 beim Spannen des Bauteils 2 in die Sackbohrung 3 eingeführt wird und dann eine formschlüssige Verbindung herstellt. Hierzu weist die Spannbuchse 21 an ihrer äußeren Mantelfläche ein Außengewinde auf, das an das Innengewinde 5 der Sackbohrung 3 angepasst ist.

Das freie Ende des Zugankers 10 weist eine äußere Mantelfläche auf, die sich zum Ende des Zugankers 10 hin konisch (alternativ sind auch Pyramidenflächen möglich) erweitert. Entsprechend weist auch die Spannbuchse 21 eine konische Innenwand auf, die sich zum freien Ende hin konisch erweitert. Ein Zurückziehen des Zugankers 10 in die Spannvorrichtung 1 hinein führt also aufgrund der aufeinander gleitenden konischen Flächen des Zugankers 10 einerseits und der Spannbuchse 21 andererseits dazu, dass sich die Spannbuchse 21 radial aufweitet. Das Außengewinde der Spannbuchse 21 greift dann in das entsprechend angepasste Innengewinde 5 der Sackbohrung 3 ein und stellt dadurch eine formschlüssige Verbindung her.

Weiterhin ist zu erwähnen, dass die Spannbuchse 21 außen von einem ringförmigen Abstreifer 22 umgeben ist. Der Abstreifer 22 verhindert, dass Schmutz in die Spannvorrichtung 1 eindringen kann.

Figur 2 zeigt eine Querschnittsansicht der Spannvorrichtung 1 mit einem Hydraulikanschluss 23 zum Spannen des Zugankers 10. Der Hydraulikanschluss 23 ist über Ölkanäle 24, 25 mit einem Druckraum 26 verbunden, wobei der in dem Druckraum 26 wirkende Hydraulikdruck von oben auf den Kolben 11 drückt und den Kolben 11 ggf. nach unten drückt. Der Kolben 11 nimmt dann den Zuganker 10 entsprechend nach unten mit. Weiterhin ist hierbei zu erwähnen, dass der Ölkanal 25 an seiner Oberseite durch eine Stopfen 27 verschlossen ist.

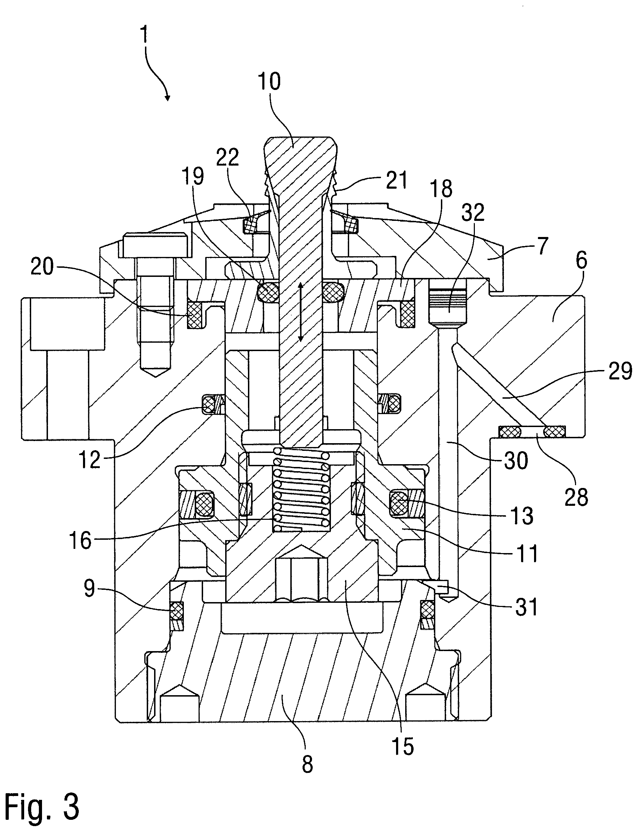

Figur 3 zeigt eine andere Querschnittsansicht der Spannvorrichtung aus den Figuren 1A und 1B mit einem Hydraulikanschluss 28 zum Entspannen der Spannvorrichtung 1. Der Hydraulikanschluss 28 ist über Ölkanäle 29, 30 mit einem Druckraum 31 verbunden, wobei der in dem Druckraum 31 herrschende Öldruck von unten auf den Kolben 11 wirkt und den Kolben 11 dadurch nach oben drückt. Hierbei ist zu erwähnen, dass der Ölkanal 30 an seiner Oberseite ebenfalls durch einen Stopfen 32 verschlossen ist.

Figur 4 zeigt eine weitere Querschnittsansicht der Spannvorrichtung 1 mit einem weiteren Pneumatikanschluss 33 für eine Sperrlufteinrichtung und eine Abfrage der Entspannstellung des Kolbens (11). Der Pneumatikanschluss 33 ist über Druckluftkanäle 34, 35, 36, 48 mit einem Druckraum 37 in dem Gehäusedeckel 7 verbunden, von wo die Druckluft durch Ausblasöffnungen nach oben ausgeblasen werden kann, um den Auflagebereich der Spannvorrichtung 1 sauber zu halten. Hierbei ist zu erwähnen, dass der Druckluftkanal 34 außen durch einen Stopfen 38 verschlossen ist.

Eine Drossel 49 sorgt hierbei für eine Druckdifferenz. Im entspannten Zustand ist der Kolben 11 in seiner oberen Stellung und der Druckluftkanal 48 (Sperrluftkanal) verschlossen, d.h. es entsteht ein Druckunterschied zwischen gespannter- und entspannter Stellung.

Figur 5 zeigt noch eine weitere Querschnittsansicht der Spannvorrichtung 1 mit einem weiteren Pneumatikanschluss 39 für eine pneumatisch arbeitende Abfrageeinrichtung.

Der Pneumatikanschluss 39 der Abfrageeinrichtung mündet zum einen über einen Druckluftkanal 40 in den Zylinder, in dem der Kolben 11 axial verschiebbar ist. Auf diese Weise kann die Stellung des Kolbens 11 von der Abfrageeinrichtung abgefragt werden, da sich die Druckverhältnisse an dem Pneumatikanschluss 39 ändern, wenn der Kolben 11 die Mündungsöffnung des Druckluftkanals 40 freigibt.

Zum anderen mündet der Pneumatikanschluss 39 der Abfrageeinrichtung aber auch über Druckluftkanäle 41, 42 in eine Auflagenkontrollbohrung 43, die im gespannten Zustand von dem Bauteil 2 verschlossen wird, wodurch sich die Druckverhältnisse an dem Pneumatikanschluss 39 ändern, was messtechnisch erfasst werden kann und dadurch eine Auflagenkontrolle ermöglicht.

Im Folgenden wird nun die Funktionsweise der erfindungsgemäßen Spannvorrichtung 1 beschrieben.

Hierbei wird davon ausgegangen, dass der Zuganker 10 bereits in der Spannvorrichtung 1 montiert und mittels des Bajonettverschlusses verankert ist. Die Feder 16 drückt den Zuganker 10 dann nach oben gegen den Kolben 11 und verhindert dadurch, dass sich der Bajonettverschluss beispielsweise bei Vibrationen oder Erschütterungen löst, was im schlimmsten Fall zu einem Herausfallen des Zugankers 10 führen könnte (Einrasten an dem Vorsprung 53).

Die Spannvorrichtung 1 wird dann zunächst entspannt, indem über den Hydraulikanschluss 28 Öl zugeführt wird, die dann in dem Druckraum 31 von unten auf den Kolben 11 wirkt und den Kolben zusammen mit dem Zuganker 10 nach oben drückt. Während dieses Entspannens der Spannvorrichtung ist der Hydraulikanschluss 23 drucklos.

Anschließend kann dann das Bauteil 2 so aufgesetzt werden, dass das freie Ende des Zugankers 10 mit der Spannbuchse 21 in die Sackbohrung 3 eingeführt wird.

Hierbei ist zu erwähnen, dass die Spannbuchse 21 im entspannten Zustand einen Außendurchmesser aufweist, der kleiner ist als der Innendurchmesser der Innenwand 4 der Sackbohrung 3. Dies ist wichtig, damit der Zuganker 10 mit der Spannbuchse 21 im entspannten Zustand in die Sackbohrung 3 eingeführt werden kann.

Nach dem Aufsetzen des Bauteils 2 auf die Spannvorrichtung 1 verschließt das Bauteil 2 die Auflagenkontrollbohrung 43 an der Oberseite der Spannvorrichtung 1, was an dem Pneumatikanschluss 39 messbar ist.

Daraufhin wird die Spannvorrichtung 1 dann gespannt. Hierzu wird zunächst der Hydraulikanschluss 28 drucklos gemacht. Darüber hinaus wird der Hydraulikanschluss 23 angesteuert, so dass der Öldruck in dem Druckraum 26 den Kolben 11 zusammen mit dem Zuganker 10 nach unten zieht. Bei dieser Abwärtsbewegung des Zugankers 10 gleiten die konischen Flächen des Zugankers 10 und der Spannbuchse 21 aufeinander, was zu einer radialen Aufweitung der Spannbuchse 21 führt. Bei dieser radialen Aufweitung der Spannbuchse 21 greift das Außengewinde in der Mantelfläche der Spannbuchse 21 dann in das Innengewinde 5 in der Innenwand 4 der Sackbohrung 3 ein und stellt damit eine formschlüssige Verbindung zwischen der Spannbuchse 21 und dem Bauteil 2 her.

Bei einer weiteren Abwärtsbewegung des Zugankers 10 führt das nun formschlüssig gespannte Bauteil 2 dann eine Niederzugsbewegung aus, um das Bauteil 2 fest an die Auflagefläche der Spannvorrichtung 1 zu ziehen. Hierbei ist zu erwähnen, dass die Spannbuchse 21 mit ihrer Unterseite auf dem Innenteil 18 aufliegt. Ein weiteres Herunterziehen des Zugankers 10 führt also zu einer entsprechenden Abwärtsbewegung der Spannbuchse 21 und damit auch des Innenteils 18, das sich an der Druckfeder 20 abstützt. Die Niederzugsbewegung muss also die Gegenkraft der Druckfeder 20 überwinden.

Die Abfrageeinrichtung kann dann durch Abfrage der Druckverhältnisse an dem Pneumatikanschluss 39 ermitteln, ob das Bauteil 2 fest auf die Auflagefläche der Spannvorrichtung 1 gezogen ist, woraufhin der Spannvorgang dann beendet ist.

Aus Figur 6 ist ersichtlich, dass das Innenteil 18 und damit auch die Spannbuchse 21 in der Spannvorrichtung 1 mit einem axialen Spiel a gelagert ist, um nach dem Spannen des Bauteils 2 die Niederzugsbewegung zu ermöglichen.

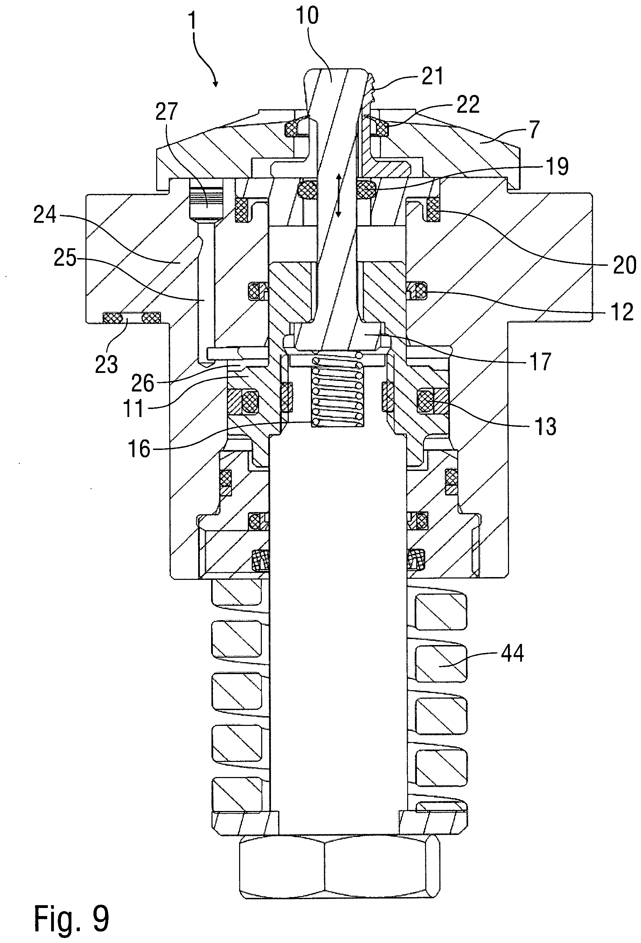

Figur 9 zeigt eine Abwandlung des vorstehend beschriebenen Ausführungsbeispiels, wobei dieses Ausführungsbeispiel weitgehend mit dem vorstehend beschriebenen Ausführungsbeispiel übereinstimmt, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass die Spannvorrichtung 1 eine sogenannte Eigensicherung aufweist. Dies bedeutet, dass das Bauteil 2 auch bei einem Druckausfall gespannt bleibt. Hierzu ist eine zusätzliche Feder 44 vorgesehen, die den Kolben 11 und damit auch den Zuganker 10 nach unten in die Spannstellung zieht.

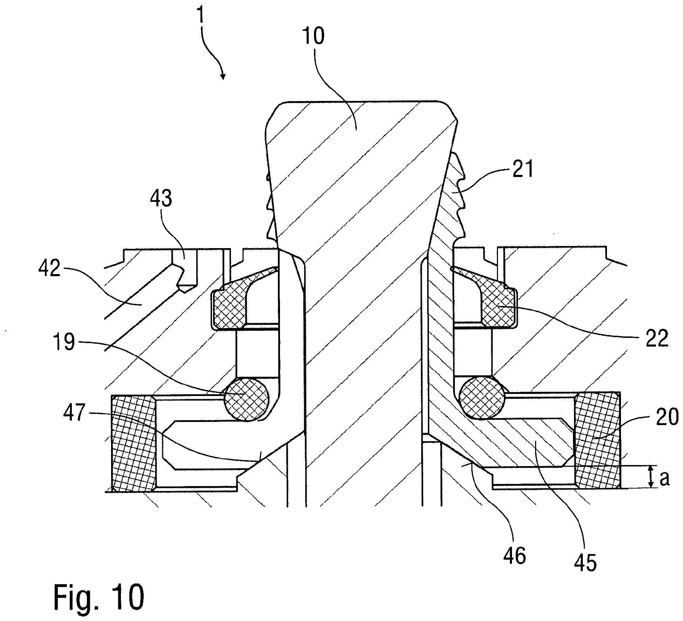

Schließlich zeigt Figur 10 eine weitere Abwandlung, die ebenfalls weitgehend mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Spannbuchse 21 an ihrer Unterseite einen radial abstehenden Kragen 45 aufweist sowie eine konische Auflauffläche 46, die auf einer konischen Auflauffläche 47 der Spannvorrichtung gleiten kann. Bei der Niederzugsbewegung gleiten also die konischen Auflaufflächen 46, 47 aufeinander, so dass der radial abstehende Kragen 45 entgegen der radial gerichteten Gegenkraft der Druckfeder 20 nach außen ausweicht, was die Niederzugsbewegung erlaubt.

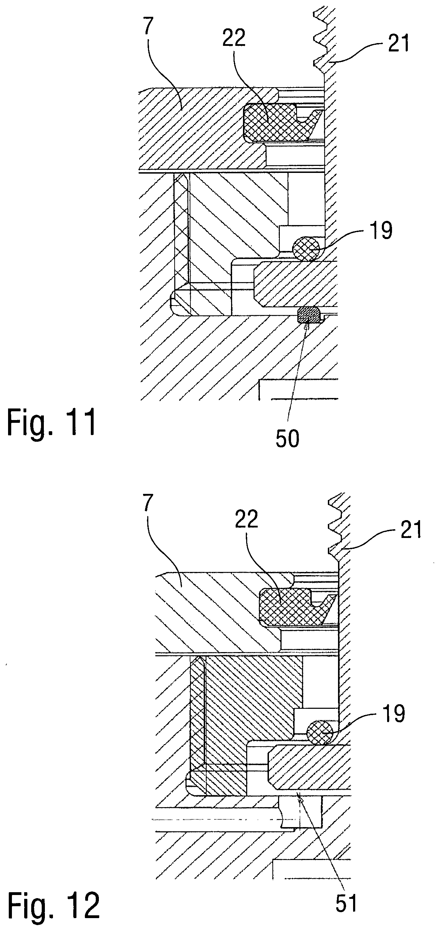

Die Figuren 11 und 12 zeigen Abwandlungen, die weitgehend mit den vorstehend beschriebenen Ausführungsbeispielen übereinstimmen, so dass zur Vermeidung von Wiederholungen auf die vorstehende Beschreibung verwiesen wird, wobei für entsprechende Einzelheiten dieselben Bezugszeichen verwendet werden.

Die Besonderheit von Figur 11 besteht darin, dass die Spannbuchse 21 unten auf einem elastischen Ring 50 aufliegt, wodurch das Einfügen des Gewindes der Spannbuchse 21 erleichtert wird.

Die Besonderheit von Figur 12 besteht darin, dass die Spannbuchse 21 unten auf einem elastischen Ring 50 aufschwimmt, wodurch ebenfalls das Einfügen des Gewindes der Spannbuchse 21 erleichtert wird.

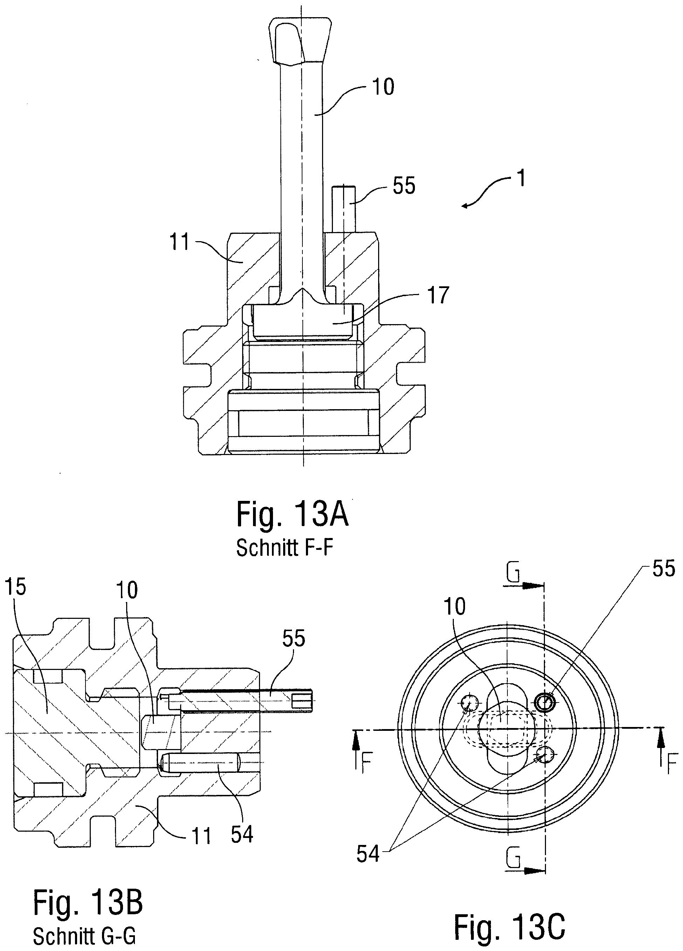

Die Figuren 13A-13C zeigen verschiedene Schnittansichten eines weiteren Ausführungsbeispiels, das weitgehend mit den vorstehend beschriebenen Ausführungsbeispielen übereinstimmt, sodass zur Vermeidung von Wiederholungen auf die vorstehende Beschreibung verwiesen wird, wobei für entsprechende Einzelheiten dieselben Bezugszeichen verwendet werden.
Eine Besonderheit dieses Ausführungsbeispiels besteht darin, dass der Bajonettverschluss zwischen der hammerförmigen Erweiterung 17 des Zugankers 10 einerseits und dem Kolben 11 andererseits eine Drehwinkelbegrenzung aufweist, die aus zwei Stiften 54 besteht, die in entsprechende Bohrungen in dem Kolben 11 eingesteckt sind. Bei einer Drehung des Zugankers 10 um seine Längsachse stößt die hammerförmige Erweiterung 17 des Zugankers 10 dann an die Stifte 54 an, wodurch der Drehwinkel des Zugankers 10 begrenzt wird.
Eine weitere Besonderheit dieses Ausführungsbeispiels besteht darin, dass der Bajonettverschluss eine Verdrehsicherung (Lösesicherung) aufweist, die ein unbeabsichtigtes Lösen des Bajonettverschlusses verhindert. Die Verdrehsicherung besteht im Wesentlichen aus einem weiteren Stift 55, der ebenfalls in eine entsprechende Bohrung in dem Kolben 11 eingesteckt ist. Der Stift 55 verhindert hierbei, dass sich der Zuganker 10 in eine Stellung dreht, die es erlaubt, den Zuganker 10 aus dem Kolben 11 herauszuziehen. Zum Lösen des Bajonettverschlusses muss hierbei also zunächst der Stift 55 entfernt werden. Anschließend kann dann der Zuganker 10 so gedreht werden, dass sich der Bajonettverschluss lösen lässt.
Die Erfindung ist nicht auf die vorstehend beschriebenen bevorzugten Ausführungsbeispiele beschränkt. Vielmehr ist eine Vielzahl von Varianten und Abwandlungen möglich, die ebenfalls unter in den Ansprüchen definierten Schutzbereich fallen.

### Bezugszeichenliste:

- 1: Spannvorrichtung
- 2: Bauteil
- 3: Sackbohrung
- 4: Innenwand der Sackbohrung
- 5: Innengewinde der Sackbohrung
- 6: Gehäuse der Spannvorrichtung
- 7: Gehäusedeckel
- 8: Gehäuseboden
- 9: Dichtung zwischen Gehäuseboden und Gehäuse
- 10: Zuganker
- 11: Kolben
- 12: Dichtung zwischen Kolben und Gehäuse
- 13: Dichtung zwischen Kolben und Gehäuse
- 14: Durchgangsbohrung im Kolben
- 15: Kolbeneinsatz
- 16: Feder zur Vorspannung des Zugankers
- 17: Hammerförmige Erweiterung des Zugankers
- 18: Innenteil
- 19: O-Ring zur Vorzentrierung des Zugankers
- 20: Druckfeder zum Vorspannen der Spannbuchse entgegen der Niederzugsbewegung
- 21: Spannbuchse
- 22: Abstreifer
- 23: Hydraulikanschluss zum Spannen des Zugankers
- 24: Ölkanal zum Spannen des Zugankers
- 25: Ölkanal zum Spannen des Zugankers
- 26: Druckraum zum Spannen des Zugankers
- 27: Stopfen
- 28: Hydraulikanschluss zum Entspannen des Zugankers
- 29: Ölkanal zum Entspannen des Zugankers
- 30: Ölkanal zum Entspannen des Zugankers
- 31: Druckraum zum Entspannen des Zugankers
- 32: Stopfen
- 33: Pneumatikanschluss für Sperrlufteinrichtung
- 34: Druckluftkanal der Sperrlufteinrichtung
- 35: Druckluftkanal der Sperrlufteinrichtung
- 36: Druckluftkanal der Sperrlufteinrichtung
- 37: Druckraum der Sperrlufteinrichtung
- 38: Stopfen
- 39: Pneumatikanschluss der Abfrageeinrichtung
- 40: Druckluftkanal der Abfrageeinrichtung (Kolbenstellungskontrolle)
- 41: Druckluftkanal der Abfrageeinrichtung
- 42: Druckluftkanal der Abfrageeinrichtung
- 43: Auflagenkontrollbohrung
- 44: Feder für Eigensicherung bei Druckausfall
- 45: Kragen der Spannbuchse
- 46: Auflauffläche der Spannbuchse
- 47: Stationäre Auflauffläche
- 48: Druckluftkanal Abfrage Entspann-Stellung
- 49: Drossel/Drosselbohrung
- 50: Elastischer Ring für Höhenausgleich
- 51: Bohrung zur Erzeugung des Luftpolsters
- 52: Druckluftkanal für Druckdifferenzmessung
- 53: Vorsprung für Bajonettverschluss (Hammer des Zugankers)
- 54: Stifte der Drehwinkelbegrenzung des Bajonettverschlusses
- 55: Stift der Verdrehsicherung (Lösesicherung)
- a: Axiales Spiel der Spannbuchse und des Innenteils

## Patentansprüche

1. Spannvorrichtung (1) zum mechanischen Spannen eines Bauteils (2), mit
a) einem axial verschiebbaren Zuganker (10) zum Spannen des Bauteils (2), und
b) einem axial verschiebbaren Kolben (11) zum Verschieben des Zugankers (10), und
c) einer Spannbuchse (21) zum Einspannen in einer Bohrung (3) des Bauteils (2),
d) wobei die Spannbuchse (21) in einem entspannten Zustand radial zusammengezogen ist, so dass die Spannbuchse (21) in die Bohrung (3) eingeführt und aus der Bohrung (3) heraus gezogen werden kann,
e) wohingegen die Spannbuchse (21) in einem gespannten Zustand radial aufgeweitet ist, so dass die Mantelfläche der Spannbuchse (21) eine mechanische Verbindung mit der Innenwand der Bohrung (3) bildet,
f) wobei die mechanische Verbindung zwischen der Mantelfläche der Spannbuchse (21) und der Innenwand der Bohrung (3) formschlüssig ist,
**gekennzeichnet durch**
g) ein Außengewinde in der Mantelfläche der Spannbuchse (21), um in ein Innengewinde (5) in der Innenwand (4) der Bohrung (3) einzugreifen und dadurch die formschlüssige Verbindung herzustellen.

2. Spannvorrichtung (1) nach Anspruch 1,
**dadurch gekennzeichnet,**
a) **dass** das Außengewinde der Spannbuchse (21) und das Innengewinde (5) der Bohrung (3) dieselbe Gewindesteigung aufweisen, und/oder
b) **dass** das Außengewinde der Spannbuchse (21) im radial zusammengezogenen Zustand einen kleineren Gewindedurchmesser aufweist als das Innengewinde (5) der Bohrung (3), und/oder
c) **dass** das Außengewinde der Spannbuchse (21) im radial aufgeweiteten Zustand den gleichen Gewindedurchmesser aufweist wie das Innengewinde (5) der Bohrung (3), und/oder
d) **dass** im radial zusammengezogenen Zustand der Spannbuchse (21) der Außendurchmesser des Außengewindes der Spannbuchse (21) kleiner ist als der Kerndurchmesser des Innengewindes (5) der Bohrung (3).

3. Spannvorrichtung (1) nach einem der vorhergehenden Ansprüche, **dadurch gekennzeichnet,**
a) **dass** die Spannbuchse (21) über den Umfang der Spannbuchse (21) verteilt mehrere Segmente aufweist,
b) **dass** die benachbarten Segmente jeweils durch einen axial verlaufenden Schlitz voneinander getrennt sind, und
c) **dass** die einzelnen Schlitze vom freien Ende der Spannbuchse (21) ausgehen und sich zumindest über einen Teil der axialen Länge der Spannbuchse (21) erstrecken.

4. Spannvorrichtung (1) nach einem der vorhergehenden Ansprüche, **dadurch gekennzeichnet,**
a) **dass** die Spannbuchse (21) zentrisch eine axiale Durchgangsbohrung für einen Zuganker (10) aufweist, und
b) **dass** sich die Durchgangsbohrung zum freien Ende der Spannbuchse (21) hin radial erweitert, oder
c) **dass** die Durchgangsbohrung zum freien Ende der Spannbuchse (21) hin pyramidenförmig in mehrere Fasen übergeht.

5. Spannvorrichtung (1) nach einem der vorhergehenden Ansprüche,
**dadurch gekennzeichnet,**
a) **dass** der Zuganker (10) axial durch die Spannbuchse (21) verläuft und an seinem freien Ende eine konische oder schrägflächige Aufweitung aufweist, so dass der Zuganker (10) beim Zurückziehen des Zugankers (10) die Spannbuchse (21) radial aufweitet, und/oder
b) **dass** der Zuganker(10) der axial durch die Spannbuchse (21) verläuft und an seinem freien Ende eine Aufweitung in Form mehrerer Fasen aufweist, so dass der Zuganker (10) beim Zurückziehen des Zugankers die Spannbuchse (21) radial aufweitet, und/oder
c) **dass** im radial zusammengezogenen Zustand der Spannbuchse (21) der Außendurchmesser des Außengewindes der Spannbuchse (21) gleich dem Gewindedurchmesser des Innengewindes (5) ist, jedoch durch die Segmentierung im entspannten Zustand kleiner als der Kerndurchmesser (4) des Innengewindes (5) der Bohrung ist, und/oder
d) **dass** im radial zusammengezogenen Zustand der Spannbuchse (21) die einzelnen Segmente auf einem Luftpolster (51) schwimmen und sich so das Einfügen des Gewindes erleichtert, und/oder
e) **dass** im radial zusammengezogenen Zustand der Spannbuchse (21) die einzelnen Segmente auf einem elastischen Ring (50) aufliegen und sich so das Einfügen des Gewindes erleichtert.

6. Spannvorrichtung (1) nach einem der vorhergehenden Ansprüche, **gekennzeichnet durch** einen Bajonettverschluss zur lösbaren mechanischen Verankerung des Zugankers (10) in dem Kolben (11).

7. Spannvorrichtung (1) nach Anspruch 6,
**dadurch gekennzeichnet,**
a) **dass** der Zuganker (10) durch den Bajonettverschluss auswechselbar ist und zwar ohne Öffnung der Fluidleitungen zum Antrieb des Kolbens (11), und/oder
b) **dass** der Zuganker (10) an seinem unteren Ende eine hammerförmige seitlich Erweiterung (17) aufweist, und/oder
c) **dass** der Kolben (11) zur Durchführung des Zugankers (10) eine Axialbohrung (14) aufweist, die im Querschnitt ein Langloch ist, so dass die hammerförmige Erweiterung (17) des Zugankers (10) in einer bestimmten Winkelstellung des Zugankers (10) durch die Axialbohrung (14) durchgeführt werden kann und ansonsten eine formschlüssige Verankerung des Zugankers (10) in dem Kolben (11) bewirkt, und/oder
d) **dass** der Zuganker (10) durch eine erste Feder (16) gegen den Kolben (11) vorgespannt wird, um ein Herausfallen des Zugankers (10) zu vermeiden.

8. Spannvorrichtung (1) nach Anspruch 6 oder 7,
**dadurch gekennzeichnet,**
a) **dass** der Bajonettverschluss eine Drehwinkelbegrenzung (54) aufweist, um den Drehwinkel des Zugankers (10) zu begrenzen, und/oder
b) **dass** die Drehwinkelbegrenzung (54) in beiden Drehrichtungen jeweils einen Drehwinkelanschlag (54) aufweist, und/oder
c) **dass** die Drehwinkelanschlag (54) jeweils aus einem Stift (54) besteht.

9. Spannvorrichtung (1) nach Anspruch 6 oder 7,
**dadurch gekennzeichnet,**
a) **dass** der Bajonettverschluss eine Verdrehsicherung (55) aufweist zur Verhinderung einer unbeabsichtigten Lösung des Bajonettverschlusses, und/oder
b) **dass** die Verdrehsicherung (55) einen Drehwinkelanschlag (55) aufweist, der eine Verdrehung des Zugankers in eine Lösestellung verhindert, und/oder
c) **dass** der Drehwinkelanschlag (55) einen Stift (55) aufweist.

10. Spannvorrichtung (1) nach einem der vorhergehenden Ansprüche, **gekennzeichnet durch**
a) einen ersten Druckraum (26) zur hydraulischen oder pneumatischen Druckbeaufschlagung des Kolbens (11) zum Spannen des Zugankers (10), und/oder
b) einen zweiten Druckraum (31) zur hydraulischen oder pneumatischen Druckbeaufschlagung des Kolbens (11) zum Entspannen des Zugankers (10), und/oder
c) eine zweite Feder (44), die den Kolben (11) in eine Spannstellung vorspannt, so dass das Bauteil (2) auch ohne eine Druckbeaufschlagung gehalten wird.

11. Spannvorrichtung (1) nach einem der vorhergehenden Ansprüche, **gekennzeichnet durch**
a) eine Abfrageeinrichtung zum Abfragen des Zustands der Spannvorrichtung (1), nämlich zur Erkennung der folgenden Zustände:
a1) Bruch des Zugankers (10),
a2) Bruch der Spannbuchse (21),
a3) Auflage oder Abwesenheit eines Bauteils (2) auf der Spannvorrichtung (1),
a4) Stellung des Zugankers (10) und/oder des Kolbens (11)in der Entspannstellung (48).
a5) Bohrung im Werkstück zu groß (40), und/oder
b) eine Sperrlufteinrichtung zum Ausblasen von Sperrluft im Bereich einer Auflage um das freie Ende des Zugankers (10) herum.

12. Spannvorrichtung (1) nach einem der vorhergehenden Ansprüche, **dadurch gekennzeichnet,**
a) **dass** die Spannvorrichtung (1) zum Vorzentrieren des Zugankers (10) ein elastisches Zentrierungselement (19) aufweist, und/oder
b) **dass** Zentrierungselement (19) die Spannbuchse (21) und den Zuganker (10) ringförmig umgibt, oder
c) **dass** das Zentrierungselement (19) den Zuganker (10) ringförmig umgibt und unterhalb der Spannbuchse (21) angeordnet ist.

13. Spannvorrichtung (1) nach einem der vorhergehenden Ansprüche, **dadurch gekennzeichnet,**
a) **dass** die Spannbuchse (21) in der Spannvorrichtung (1) mit einem axialen Spiel (a) gelagert ist, damit die Spannbuchse (21) eine axiale Niederzugsbewegung ausführen kann, und/oder
b) **dass** eine dritte Feder (20) vorgesehen ist zum Vorspannen der Spannbuchse (21) entgegen der Niederzugsbewegung.

14. Spannvorrichtung (1) nach Anspruch 13,
**dadurch gekennzeichnet,**
a) **dass** die Spannbuchse (21) unten einen radial abstehenden Kragen (45) aufweist und die dritte Feder (20) den radial abstehenden Kragen (45) außen umgibt und radial nach innen drückt, oder
b) **dass** die dritte Feder (20) unter der Spannbuchse (21) angeordnet ist und die Spannbuchse (21) axial nach oben drückt.

15. Spannvorrichtung (1) nach einem der Ansprüche 5 bis 14, **dadurch gekennzeichnet,**
a) **dass** die Spannbuchse (21) an ihrer Unterseite eine konische Auflauffläche (46) aufweist, die sich nach oben hin konisch verjüngt, und
b) **dass** die Spannbuchse (21) mit ihrer konischen Auflauffläche (46) auf einer in der Spannvorrichtung (1) fixierten konischen Auflauffläche (47) aufliegt, und
c) **dass** die Spannbuchse (21) bei einem Spannvorgang sowohl radial aufgeweitet wird als auch aufgrund der aufeinander gleitenden Auflaufflächen (46, 47) axial niedergezogen wird.

## Claims

1. Clamping device (1) for mechanically clamping a component (2), having
a) an axially displaceable tension rod (10) for clamping the component (2), and
b) an axially displaceable piston (11) for displacing the tension rod (10), and
c) a clamping bushing (21) for clamping in a bore (3) of the component (2),
d) wherein the clamping bushing (21) in a relaxed state is contracted radially so that the clamping bushing (21) can be introduced into the bore (3) and removed from the bore (3),
e) whereas the clamping bushing (21) in a clamped state is expanded radially so that the lateral surface of the clamping bushing (21) forms a mechanical connection with the inside wall of the bore (3),
f) wherein the mechanical connection between the lateral surface of the clamping bushing (21) and the inside wall of the bore (3) is interlocking,
**characterised by**
g) an external thread in the lateral surface of the clamping bushing (21) for engaging an internal thread (5) in the inside wall (4) of the bore (3), thereby producing the interlocking connection.

2. Clamping device (1) according to claim 1,
**characterised in that**
a) the external thread of the clamping bushing (21) and the internal thread (5) of the bore (3) have the same thread pitch, and/or
b) the external thread of the clamping bushing (21) in the radially contracted state has a smaller thread diameter than the internal thread (5) of the bore (3), and/or
c) the external thread of the clamping bushing (21) in the radially expanded state has the same thread diameter as the internal thread (5) of the bore (3), and/or
d) in the radially contracted state of the clamping bushing (21), the outside diameter of the external thread of the clamping bushing (21) is smaller than the core diameter of the internal thread (5) of the bore (3).

3. Clamping device (1) according to any one of the preceding claims, **characterised in that**
a) the clamping bushing (21) has a plurality of segments distributed over the periphery of the clamping bushing (21),
b) the adjacent segments are each separated from one another by an axially extending slot, and
c) the individual slots start from the free end of the clamping bushing (21) and extend over at least a portion of the axial length of the clamping bushing (21).

4. Clamping device (1) according to any one of the preceding claims, **characterised in that**
a) the clamping bushing (21) has in the centre an axial through-bore for a tension rod (10), and
b) the through-bore widens radially towards the free end of the clamping bushing (21), or
c) the through-bore merges in a pyramidal manner into a plurality of bevels towards the free end of the clamping bushing (21).

5. Clamping device (1) according to any one of the preceding claims, **characterised in that**
a) the tension rod (10) extends axially through the clamping bushing (21) and has at its free end an expanded portion which is conical or has a sloping surface, so that the tension rod (10) radially expands the clamping bushing (21) when the tension rod (10) is withdrawn, and/or
b) the tension rod (10) extends axially through the clamping bushing (21) and has at its free end an expanded portion in the form of a plurality of bevels, so that the tension rod (10) radially expands the clamping bushing (21) when the tension rod is withdrawn, and/or
c) in the radially contracted state of the clamping bushing (21), the outside diameter of the external thread of the clamping bushing (21) is equal to the thread diameter of the internal thread (5) but, because of the segmentation, is smaller in the relaxed state than the core diameter (4) of the internal thread (5) of the bore, and/or
d) in the radially contracted state of the clamping bushing (21), the individual segments float on a cushion of air (51), and insertion of the thread is thus facilitated, and/or
e) in the radially contracted state of the clamping bushing (21), the individual segments lie on a resilient ring (50), and insertion of the thread is thus facilitated.

6. Clamping device (1) according to any one of the preceding claims, **characterised by** a bayonet coupling for the releasable mechanical anchoring of the tension rod (10) in the piston (11).

7. Clamping device (1) according to claim 6,
**characterised in that**
a) the tension rod (10) is removable by means of the bayonet coupling, without opening the fluid lines for driving the piston (11), and/or
b) the tension rod (10) has at its lower end a hammer-shaped laterally enlarged portion (17), and/or
c) the piston (11), for the passage of the tension rod (10), has an axial bore (14) which is a slot in cross-section, so that the hammer-shaped enlarged portion (17) of the tension rod (10) can be guided through the axial bore (14) in a specific angular position of the tension rod (10) and otherwise effects interlocking anchoring of the tension rod (10) in the piston (11), and/or
d) the tension rod (10) is biased against the piston (11) by a first spring (16) in order to prevent the tension rod (10) from falling out.

8. Clamping device (1) according to claim 6 or 7,
**characterised in that**
a) the bayonet coupling has a rotation angle limiting means (54) for limiting the rotation angle of the tension rod (10), and/or
b) the rotation angle limiting means (54) has a rotation angle stop (54) in both directions of rotation, and/or
c) the rotation angle stop (54) in each case consists of a pin (54).

9. Clamping device (1) according to claim 6 or 7,
**characterised in that**
a) the bayonet coupling has an anti-turn device (55) for preventing unintentional release of the bayonet coupling, and/or
b) the anti-turn device (55) has a rotation angle stop (55) which prevents the tension rod from being turned into a release position, and/or
c) the rotation angle stop (55) has a pin (55).

10. Clamping device (1) according to any one of the preceding claims, **characterised by**
a) a first pressure chamber (26) for applying hydraulic or pneumatic pressure to the piston (11) in order to clamp the tension rod (10), and/or
b) a second pressure chamber (31) for applying hydraulic or pneumatic pressure to the piston (11) in order to relax the tension rod (10), and/or
c) a second spring (44) which biases the piston (11) into a clamping position so that the component (2) is also held without the application of pressure.

11. Clamping device (1) according to any one of the preceding claims, **characterised by**
a) an interrogation device for interrogating the state of the clamping device (1), namely for detecting the following states:
a1) breakage of the tension rod (10),
a2) breakage of the clamping bushing (21),
a3) seating or absence of a component (2) on the clamping device (1),
a4) position of the tension rod (10) and/or of the piston (11) in the relaxed position (48),
a5) bore in the workpiece too large (40), and/or
b) a sealing air device for blowing out sealing air in the region of a seat about the free end of the tension rod (10).

12. Clamping device (1) according to any one of the preceding claims, **characterised in that**
a) the clamping device (1) has a resilient centring element (19) for pre-centring the tension rod (10), and/or
b) the centring element (19) surrounds the clamping bushing (21) and the tension rod (10) annularly, or
c) the centring element (19) surrounds the tension rod (10) annularly and is arranged beneath the clamping bushing (21).

13. Clamping device (1) according to any one of the preceding claims, **characterised in that**
a) the clamping bushing (21) is mounted in the clamping device (1) with axial play (a) so that the clamping bushing (21) is able to perform an axial pull-down movement, and/or
b) a third spring (20) is provided for biasing the clamping bushing (21) against the pull-down movement.

14. Clamping device (1) according to claim 13,
**characterised in that**
a) the clamping bushing (21) has at the bottom a radially protruding collar (45), and the third spring (20) surrounds the radially protruding collar (45) externally and presses it radially inwards, or
b) the third spring (20) is arranged beneath the clamping bushing (21) and presses the clamping bushing (21) axially upwards.

15. Clamping device (1) according to any one of claims 5 to 14, **characterised in that**
a) the clamping bushing (21) has on its underside a conical ramp (46) which tapers conically upwards, and
b) the clamping bushing (21) rests with its conical ramp (46) on a conical ramp (47) which is fixed in the clamping device (1), and
c) during a clamping operation, the clamping bushing (21) is both radially expanded and, due to the ramps (46, 47) sliding over one another, pulled down axially.

## Revendications

1. Dispositif de serrage (1) servant à serrer de manière mécanique un composant (2), avec
a) un tirant d'ancrage (10) pouvant être coulissé de manière axiale, servant à serrer le composant (2), et
b) un piston (11) pouvant être coulissé de manière axiale, servant à faire coulisser le tirant d'ancrage (10), et
c) une douille de serrage (21) destinée à être enserrée dans un alésage (3) du composant (2),
d) dans lequel la douille de serrage (21) est resserrée de manière radiale dans un état desserré de sorte que la douille de serrage (21) soit introduite dans l'alésage (3) et puisse être tirée en dehors de l'alésage (3),
e) alors que la douille de serrage (21) est élargie de manière radiale dans un état serré de sorte que la surface enveloppante de la douille de serrage (21) forme une liaison mécanique avec la paroi intérieure de l'alésage (3),
f) dans lequel la liaison mécanique entre la surface enveloppante de la douille de serrage (21) et la paroi intérieure de l'alésage (3) est à complémentarité de forme,
**caractérisé par**
g) un filetage extérieur dans la surface enveloppante de la douille de serrage (21) afin de venir en prise avec un filetage intérieur (5) dans la paroi intérieure (4) de l'alésage (3) et d'établir ainsi la liaison à complémentarité de forme.

2. Dispositif de serrage (1) selon la revendication 1,
**caractérisé en ce**
a) **que** le filetage extérieur de la douille de serrage (21) et le filetage intérieur (5) de l'alésage (3) présentent le même pas de filetage, et/ou
b) **que** le filetage extérieur de la douille de serrage (21) présente, dans l'état resserré de manière radiale, un diamètre de filetage plus petit que le filetage intérieur (5) de l'alésage (3), et/ou
c) **que** le filetage extérieur de la douille de serrage (21) présente, dans l'état élargi de manière radiale, le même diamètre de filetage que le filetage intérieur (5) de l'alésage (3), et/ou
d) **que** dans l'état resserré de manière radiale de la douille de serrage (21), le diamètre extérieur du filetage extérieur de la douille de serrage (21) est plus petit que le diamètre central du filetage intérieur (5) de l'alésage (3).

3. Dispositif de serrage (1) selon l'une quelconque des revendications précédentes, **caractérisé en ce**
a) **que** la douille de serrage (21) présente plusieurs segments de manière répartie sur la périphérie de la douille de serrage (21),
b) **que** les segments adjacents sont séparés les uns des autres respectivement par une entaille s'étendant de manière axiale, et
c) **que** les diverses entailles partent de l'extrémité libre de la douille de serrage (21) et s'étendent au moins sur une partie de la longueur axiale de la douille de serrage (21).

4. Dispositif de serrage (1) selon l'une quelconque des revendications précédentes, **caractérisé en ce**
a) **que** la douille de serrage (21) présente au centre un alésage de passage axial pour un tirant d'ancrage (10), et
b) **que** l'alésage de passage s'élargit de manière radiale en direction de l'extrémité libre de la douille de serrage (21), ou
c) **que** l'alésage de passage se confond en plusieurs chanfreins de manière à présenter une forme pyramidale en direction de l'extrémité libre de la douille de serrage (21).

5. Dispositif de serrage (1) selon l'une quelconque des revendications précédentes,
**caractérisé en ce**
a) **que** le tirant d'ancrage (10) s'étend de manière axiale à travers la douille de serrage (21) et présente, au niveau de son extrémité libre, un élargissement conique ou incliné de sorte que le tirant d'ancrage (10) élargit de manière radiale la douille de serrage (21) lors du retrait du tirant d'ancrage (10), et/ou
b) **que** le tirant d'ancrage (10) s'étend de manière axiale à travers la douille de serrage (21) et présente, au niveau de son extrémité libre, un élargissement sous la forme de plusieurs chanfreins de sorte que le tirant d'ancrage (10) élargit de manière radiale la douille de serrage (21) lors du retrait du tirant d'ancrage, et/ou
c) **que** dans l'état resserré de manière radiale de la douille de serrage (21), le diamètre extérieur du filetage extérieur de la douille de serrage (21) est égal au diamètre de filetage du filetage intérieur (5), toutefois, du fait de la segmentation, est plus petit dans l'état desserré que le diamètre central (4) du filetage intérieur (5) de l'alésage, et/ou
d) **que** dans l'état resserré de manière radiale de la douille de serrage (21), les divers segments flottent sur un coussin d'air (51) et l'insertion du filetage est ainsi facilitée, et/ou
e) **que** dans l'état resserré de manière radiale de la douille de serrage (21), les divers segments reposent sur une bague (50) élastique et l'insertion du filetage est ainsi facilitée.

6. Dispositif de serrage (1) selon l'une quelconque des revendications précédentes, **caractérisé par** une fermeture par baïonnette servant à ancrer de manière mécanique et amovible le tirant d'ancrage (10) dans le piston (11).

7. Dispositif de serrage (1) selon la revendication 6, **caractérisé en ce**
a) **que** le tirant d'ancrage (10) est interchangeable avec la fermeture par baïonnette, à savoir sans ouverture des conduits de fluide servant à l'entraînement du piston (11), et/ou
b) **que** le tirant d'ancrage (10) présente, au niveau de son extrémité inférieure, un élargissement (17) latéral présentant une forme de marteau, et/ou
c) **que** le piston (11) présente, afin de faire passer le tirant d'ancrage (10), un alésage axial (14), qui est, dans la section transversale, un trou oblong de sorte que l'élargissement (17) présentant une forme de marteau du tirant d'ancrage (10) puisse être guidé à travers l'alésage axial (14) dans une position angulaire définie du tirant d'ancrage (10) et, autrement, provoque un ancrage par complémentarité de forme du tirant d'ancrage (10) dans le piston (11), et/ou
d) **que** le tirant d'ancrage (10) est précontraint par un premier ressort (16) contre le piston (11) afin d'éviter une chute du tirant d'ancrage (10).

8. Dispositif de serrage (1) selon la revendication 6 ou 7, **caractérisé en ce**
a) **que** la fermeture par baïonnette présente une limitation d'angle de rotation (54) afin de limiter l'angle de rotation du tirant d'ancrage (10), et/ou
b) **que** la limitation d'angle de rotation (54) présente, dans les deux directions de rotation, respectivement une butée d'angle de rotation (54), et/ou
c) **que** la butée d'angle de rotation (54) est constituée respectivement d'une goupille (54).

9. Dispositif de serrage (1) selon la revendication 6 ou 7, **caractérisé en ce**
a) **que** la fermeture par baïonnette présente un système anti-rotation (55) servant à empêcher un détachement accidentel de la fermeture par baïonnette, et/ou
b) **que** le système anti-rotation (55) présente une butée d'angle de rotation (55), qui empêche une rotation du tirant d'ancrage dans une position de détachement, et/ou
c) **que** la butée d'angle de rotation (55) présente une goupille (55).

10. Dispositif de serrage (1) selon l'une quelconque des revendications précédentes, **caractérisé par**
a) un premier espace de pression (26) servant à soumettre le piston (11) à l'action d'une pression hydraulique ou pneumatique afin de serrer le tirant d'ancrage (10), et/ou
b) un deuxième espace de pression (31) servant à soumettre le piston (11) à l'action d'une pression hydraulique ou pneumatique afin de desserrer le tirant d'ancrage (10), et/ou
c) un deuxième ressort (44), qui précontraint le piston (11) dans une position de serrage de sorte que le composant (2) soit maintenu également sans une application de pression.

11. Dispositif de serrage (1) selon l'une quelconque des revendications précédentes, **caractérisé par**
a) un système de consultation servant à consulter l'état du dispositif de serrage (1), à savoir servant à identifier les états qui suivent :
a1) une rupture du tirant d'ancrage (10),
a2) une rupture de la douille de serrage (21),
a3) un dépôt d'un composant (2) sur le dispositif de serrage (1) ou une absence dudit composant sur le dispositif de serrage,
a4) un placement du tirant d'ancrage (10) et/ou du piston (11) dans la position de desserrage (48),
a5) un alésage dans la pièce trop grand (40), et/ou
b) un système à air de blocage servant à souffler de l'air de blocage dans la zone d'un dépôt tout autour de l'extrémité libre du tirant d'ancrage (10).

12. Dispositif de serrage (1) selon l'une quelconque des revendications précédentes, **caractérisé en ce**
a) **que** le dispositif de serrage (1) présente, aux fins du centrage préalable du tirant d'ancrage (10), un élément de centrage (19) élastique, et/ou
b) **que** l'élément de centrage (19) entoure la douille de serrage (21) et le tirant d'ancrage (10) de manière à présenter une forme annulaire, ou
c) **que** l'élément de centrage (19) entoure de manière à présenter une forme annulaire le tirant d'ancrage (10) et est disposé sous la douille de serrage (21).

13. Dispositif de serrage (1) selon l'une quelconque des revendications précédentes, **caractérisé en ce**
a) **que** la douille de serrage (21) est montée dans le dispositif de serrage (1) avec un jeu axial (a), afin que la douille de serrage (21) puisse exécuter un déplacement de tirage vers le bas axial, et/ou
b) **qu'**un troisième ressort (20) est prévu afin de précontraindre la douille de serrage (21) à l'encontre du déplacement de tirage vers le bas.

14. Dispositif de serrage (1) selon la revendication 13, **caractérisé en ce**
a) **que** la douille de serrage (21) présente en bas un rebord (45) faisant saillie de manière radiale et le troisième ressort (20) entoure à l'extérieur le rebord (45) faisant saillie de manière radiale et le pousse vers l'intérieur de manière radiale, ou
b) **que** le troisième ressort (20) est disposé sous la douille de serrage (21) et pousse de manière axiale vers le haut la douille de serrage (21).

15. Dispositif de serrage (1) selon l'une quelconque des revendications 5 à 14,
**caractérisé en ce**
a) **que** la douille de serrage (21) présente, au niveau de son côté inférieur, une surface en pente (46), qui se rétrécit de manière conique vers le haut, et
b) **que** la douille de serrage (21) repose, par sa surface en pente (46) conique, sur une surface en pente (47) conique fixée dans le dispositif de serrage (1), et
c) **que** la douille de serrage (21) est lors d'une opération de serrage à la fois élargie de manière radiale et tirée vers le bas de manière axiale du fait des surfaces en pente (46, 47) glissant les unes sur les autres.
